(19)

Europäisches
Patentamt

European
Patent Office

Office européen
des brevets

(11)  **EP 3 930 057 A1**

(12)  **EUROPEAN PATENT APPLICATION**
published in accordance with Art. 153(4) EPC

(43) Date of publication:
**29.12.2021  Bulletin 2021/52**

(21) Application number: **20835654.3**

(22) Date of filing: **09.01.2020**

(51) Int Cl.:
**H01M 4/66** $^{(2006.01)}$

(86) International application number:
**PCT/CN2020/071176**

(87) International publication number:
**WO 2021/000562 (07.01.2021 Gazette 2021/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **01.07.2019  CN 201910591842**

(71) Applicant: **Contemporary Amperex Technology
Co., Limited
Jiaocheng District
Ningde
Fujian 352100 (CN)**

(72) Inventors:
• **LIANG, Chengdu
Ningde, Fujian 352100 (CN)**
• **HUANG, Qisen
Ningde, Fujian 352100 (CN)**
• **WANG, Shiwen
Ningde, Fujian 352100 (CN)**

(74) Representative: **Raynor, Simon Mark et al
Murgitroyd & Company Milton Keynes
Altius House
1 North Fourth Street
Milton Keynes MK9 1DG (GB)**

(54)  **POSITIVE ELECTRODE CURRENT COLLECTOR, POSITIVE ELECTRODE PLATE,
ELECTROCHEMICAL APPARATUS AND DEVICE THEREOF**

(57)     Positive current collector, positive plate, electrochemical device and apparatus are disclosed. The positive current collector includes a support layer and a metal conductive layer disposed on the support layer, where a ratio of a density of the metal conductive layer to an intrinsic density of a material of the metal conductive layer is greater than or equal to 0.89, and the material of the metal conductive layer is selected from one or more of aluminum, aluminum alloy, nickel, nickel alloy, titanium, titanium alloy, silver and silver alloy. The positive current collector can provide simultaneously both low weight and high electrical performance, thus enabling the electrochemical device to achieve both high weight energy density and electrochemical performance at the same time.

10

FIG. 1

**EP 3 930 057 A1**

**Description**

CROSS REFERENCE TO RELATED APPLICATIONS

The present application claims the priority of Chinese Patent Application No. 201910591842.1 entitled "Positive current collector, Positive plate and Electrochemical Device" filed on July 1, 2019, which is hereby incorporated by reference in its entirety.

TECHNICAL FIELD

The present application relates to the field of battery technology, and in particular relates to a positive current collector, a positive plate, an electrochemical device and an apparatus.

BACKGROUND

Secondary batteries are widely used in electric vehicles and consumer electronics due to their advantages of high energy density, high output power, long cycle life and less environmental pollution. With continuous expansion of application range of the secondary batteries, the requirements for the weight energy density of secondary batteries are becoming higher and higher.

In order to obtain a secondary battery with higher weight energy density, the following improvements are usually made for the secondary battery: (1) selecting a positive active material or a negative active material with a high specific discharge capacity; (2) optimizing mechanism design of the secondary battery to make its weight as light as possible; (3) choosing a positive or negative plate with high compacted density; (4) reducing the weight of each component of the secondary battery.

It is well known that, for the improvement of the current collector, the common practice is to select a light-weight current collector, for example, a perforated current collector or a plastic current collector plated with a metal layer.

However, for the plastic current collector plated with a metal layer, the weight is reduced, some performance degradations such as processing performance and electrical performance are caused, which affects the performance of the plate and the battery. To obtain a current collector with good performance, many improvements are needed.

In order to overcome the shortcomings of the prior art, the present application is hereby provided.

SUMMARY

Some embodiments of the present application provide a positive current collector, a positive plate, an electrochemical device and an apparatus, aiming to enable the positive current collector to have both low weight and high electrical performance simultaneously, thus making the electrochemical device have high weight energy density and electrochemical performance at the same time.

A first aspect of the embodiments of the present application provides a positive current collector including: a support layer, including two opposite surfaces in its own thickness direction; a metal conductive layer, provided on at least one of the two opposite surfaces of the support layer; where a ratio of a density of the metal conductive layer to an intrinsic density of a material of the metal conductive layer is greater than or equal to 0.89, and the material of the metal conductive layer is selected from one or more of aluminum, aluminum alloy, nickel, nickel alloy, titanium, titanium alloy, silver and silver alloy.

A second aspect of the embodiments of the present application provides a positive plate. The positive plate includes a positive current collector and a positive active material layer disposed on the positive current collector, here the positive current collector is the one of the first aspect of the embodiments of the present application.

A third aspect of the embodiments of the present application provides an electrochemical device. The electrochemical device includes a positive plate, a negative plate, a separator and an electrolyte, here the positive plate is the one of the second aspect of the embodiments of the present application.

A fourth aspect of the embodiments of the present application provides an apparatus, including the electrochemical device described in the third aspect of the present application. The electrochemical device may be used as a power source for the apparatus, and the electrochemical device may also be used as an energy storage unit of the apparatus.

Compared with the prior art, the technical solution of the present application has at least the following advantages.

In the positive current collector provided by the embodiments of the present application, a metal conductive layer having a small thickness is provided on at least one surface of the support layer, which can significantly reduce the weight of the positive current collector, thereby significantly increasing the weight energy density of the electrochemical device. In addition, the ratio of the density of the metal conductive layer to the intrinsic density of the material of the metal conductive layer is greater than or equal to 0.89, and the material of the metal conductive layer is selected from one or more of aluminum, aluminum alloy, nickel, nickel alloy, titanium, titanium alloy, silver and silver alloy. During the processing and use of the positive current collector, these properties can prevent the metal conductive layer having a small thickness from being damaged due to stretching, or the sharp increase in resistance caused by stretching deformation, ensuring that the positive current collector has high structural stability and good electrical conductivity and current collection performance. In this way, the electrochemical device has the advantages of low impedance and low polarization, thus making the electrochemical device have high electrochemical performance.

The apparatus of the present application includes the electrochemical device provided by the present application, and thus has at least the same advantages as the electrochemical device.

## BRIEF DESCRIPTION OF THE DRAWINGS

In order to explain the technical solutions of the embodiments of the present application more clearly, the drawings used in the embodiments of the present application will be briefly described below. For those skilled in the art, other drawings may also be obtained in accordance with the drawings without any creative effort.

FIG. 1 shows a structural schematic diagram of a positive current collector according to a specific embodiment of the present application.

FIG. 2 shows a structural schematic diagram of a positive current collector according to another specific embodiment of the present application.

FIG. 3 shows a structural schematic diagram of a positive current collector according to another specific embodiment of the present application.

FIG. 4 shows a structural schematic diagram of a positive current collector according to another specific embodiment of the present application.

FIG. 5 shows a structural schematic diagram of a positive current collector according to still another specific embodiment of the present application.

FIG. 6 shows a structural schematic diagram of a positive current collector according to still another specific embodiment of the present application.

FIG. 7 shows a structural schematic diagram of a positive current collector according to still another specific embodiment of the present application.

FIG. 8 shows a structural schematic diagram of a positive current collector according to still another specific embodiment of the present application.

FIG. 9 shows a structural schematic diagram of a positive current collector according to another specific embodiment of the present application.

FIG. 10 is a perspective view of an electrochemical device as a lithium-ion secondary battery according to a specific embodiment of the present application.

FIG. 11 is an exploded view of the lithium-ion secondary battery shown in FIG. 10.

FIG. 12 is a perspective view of a battery module according to a specific embodiment of the present application.

FIG. 13 is a perspective view of a battery pack according to a specific embodiment of the present application.

FIG. 14 is an exploded view of the battery pack shown in FIG. 13.

FIG. 15 is a schematic diagram of an apparatus according to a specific embodiment of the present application.

Herein, the reference numerals are described as follows:

10, positive current collector.
101, support layer.
101a, first surface; 101b, second surface.
1011, first sublayer; 1012, second sublayer; 1013, third sublayer.
102, metal conductive layer.
103, protective layer.
1, battery pack.
2, upper box.
3, lower box.
4, battery module.
5, secondary battery.
51, outer package.
52, electrode assembly.

53, top cover assembly.

## DETAILED DESCRIPTION

In order to make the purpose, technical solution and advantages of the present application clearer, the present application will be further explained in detail below with reference to embodiments. It should be understood that the embodiments described in this specification only explain the present application, but do not constitute a limitation to the present application.

For simplicity, only some numerical ranges are explicitly disclosed herein. However, any lower limit may be combined with any upper limit to form an unspecified range; and any lower limit may be combined with another lower limit to form an unspecified range. Similarly, any upper limit may be combined with any other upper limit to form an unspecified range. In addition, although not explicitly stated, every point or single value between endpoints of the range is included in the range. Therefore, each point or single value may be used as its own lower limit or upper limit, combined with any other point or single value, or combined with other lower limit or upper limit, to form an unspecified range.

In the description herein, it should be noted that, unless otherwise specified, "above" and "below" include the endpoint itself, and the meaning of "more" in "one or more" means two or more.

The above content of the present application is not intended to describe each disclosed embodiment or each implementation in the present application. The following description exemplifies exemplary embodiments more specifically. At many points throughout the present application, guidance is provided through a series of embodiments which may be used in various combinations. In each embodiment, the enumeration serves only as a representative group and should not be construed as an exhaustive list.

### Positive current collector

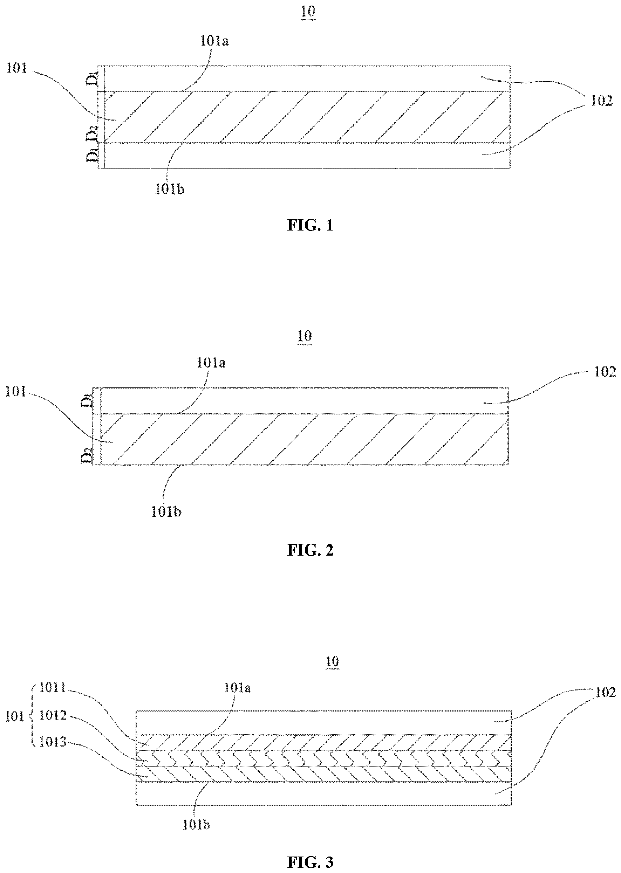

Embodiments of the first aspect of the present application provide a positive current collector 10. Referring to FIG. 1 and FIG. 2, the positive current collector 10 includes a support layer 101 and a metal conductive layer 102 that are stacked, where the support layer 101 has a first surface 101a and a second surface 101b opposite to each other in its own thickness direction, and the metal conductive layer 102 is disposed on either or both of the first surface 101a and the second surface 101b of the support layer 101.

In the positive current collector 10, a ratio of a density of the metal conductive layer 102 to an intrinsic density of a material of the metal conductive layer 102 is greater than or equal to 0.89, and the material of the metal conductive layer 102 is selected from one or more of aluminum, aluminum alloy, nickel, nickel alloy, titanium, titanium alloy, silver and silver alloy.

The density of the metal conductive layer 102 may be measured by a method known in the existing technology. As an example, a positive current collector 10 with an area of 10 $cm^2$ is cut out, and its mass is weighed with a balance accurate to 0.0001 g, denoted as $m_1$ in g. A thickness of the positive current collector 10 in 20 points is measured by using a tenthousandth micrometer, the average value is calculated, and denoted as $d_1$ in $\mu m$. The weighed positive current collector 10 is soaked in a 1mol/L NaOH aqueous solution for 1 min. After the metal conductive layer 102 is completely dissolved, the support layer 101 is taken out, rinsed with deionized water for 5 times, and baked at 100°C for 20 min. Then the mass is weighed with the same balance, and denoted as $m_2$ in g. A thickness of the support layer 101 in 20 points is measured by using the same tenthousandth micrometer, the average value is calculated, and denoted as $d_2$ in $\mu m$. The density of the metal conductive layer 102 is calculated according to the following formula 1 in $g/cm^3$.

$$\text{The density of the metal conductive layer} = \frac{(m_1 - m_2)}{(d_1 - d_2)/1000} \qquad \text{Formula 1}$$

In order to further improve the measurement accuracy, five positive current collectors 10 with the same size may be used to test the density of the metal conductive layer 102 respectively, and the results are averaged.

Herein, an intrinsic density of aluminum is 2.7 $g/cm^3$, an intrinsic density of aluminum alloy is 2.0 $g/cm^3$ ~ 2.8 $g/cm^3$, an intrinsic density of nickel is 8.9 $g/cm^3$, an intrinsic density of nickel alloy is 6.0 $g/cm^3$ ~ 9.0 $g/cm^3$, an intrinsic density of titanium is 4.51 $g/cm^3$, an intrinsic density of titanium alloy is 4.0 $g/cm^3$ ~ 5.0 $g/cm^3$, an intrinsic density of silver is 10.49 $g/cm^3$, and an intrinsic density of silver alloy is 9.0 $g/cm^3$ ~ 12.0 $g/cm^3$.

In the positive current collector 10 of the embodiments of the present application, the metal conductive layer 102 with a small thickness is disposed on at least one surface of the support layer 101, which can significantly reduce the weight of the positive current collector 10 compared with the traditional metal positive current collector (such as aluminum foil), so as to significantly increase the weight energy density of the electrochemical device.

In addition, the positive current collector 10 is inevitably stretched during the preparation, processing and use of the positive plates and electrochemical devices, such as the rolling of the plates or the expansion of the battery. The ratio of the density of the metal conductive layer 102 to the intrinsic density of the material of the metal conductive layer 102 is greater than or equal to 0.89, and the material of the metal conductive layer 102 is selected from one or more of aluminum, aluminum alloy, nickel, nickel alloy, titanium, titanium alloy, silver and the silver alloys, which can prevent the metal conductive layer 102 with a small thickness from being damaged due to stretching. Furthermore, the mental conductive layer 102 with a small thickness can also be prevented from electrical conductivity being unevenly distributed and resistance increasing sharply caused by tensile deformation, so as to ensure that the positive current collector 10 has good and uniform conductivity and current collection performance, and make the electrochemical device have the advantages of low impedance and low polarization, thereby making the electrochemical device have high electrochemical properties, as well as high rate capability and cycle performance.

Therefore, the use of the positive current collector 10 of the embodiment of the present application can enable the electrochemical device to have both high weight energy density and electrochemical performance at the same time.

In the positive current collector 10 of the embodiments of the present application, a thickness $D_2$ of the support layer 101 is preferably 1 $\mu$m$\leq D_2 \leq$20 $\mu$m, for example, 1 $\mu$m, 1.5 $\mu$m, 2 $\mu$m, 3 $\mu$m, 4 $\mu$m, 5 $\mu$m, 6 $\mu$m, 7 $\mu$m, 8 $\mu$m, 10 $\mu$m , 12 $\mu$m, 15 $\mu$m, 18 $\mu$m and 20 $\mu$m. The range of the thickness $D_2$ of the support layer 101 may be composed of any two values mentioned above. Preferably, $D_2$ is 2 $\mu$m$\leq D_2 \leq$10 $\mu$m. More preferably, $D_2$ is 2 $\mu$m$\leq D_2 \leq$6 $\mu$m.

The thickness $D_2$ of the support layer 101 is preferably 1 $\mu$m or more, more preferably 2 $\mu$m or more, which is conducive to making the support layer 101 have sufficient mechanical strength, not prone to breakage during the processing and use of the positive current collector 10, and play a good supporting and protective role for the mental conductive layer 102, thereby ensuring good mechanical stability and a long service life of the positive current collector 10. The thickness $D_2$ of the support layer 101 is preferably 20 $\mu$m or less, more preferably 10 $\mu$m or less, and more preferably 6 $\mu$m or less, which is conductive to making the electrochemical device have a small volume and weight and thereby increasing the energy density of the electrochemical device.

In some embodiments, a Young's modulus E of the support layer 101 is preferably E$\geq$1.9 GPa. The support layer 101 has appropriate rigidity to play the supporting role of the support layer 101 on the metal conductive layer 102 and ensure the overall strength of the positive current collector 10. During the processing of the positive current collector 10, the support layer 101 will not be excessively stretched or deformed, which may prevent the support layer 101 and the metal conductive layer 102 from being broken, help to improve the binding strength between the support layer 101 and the metal conductive layer 102 and make them not easy to be separated, thereby ensure the positive current collector 10 to have high mechanical stability and working stability, so as to make the electrochemical device have high electrochemical performance and a long cycle life.

Further, the Young's modulus E of the support layer 101 is preferably 4 GPa, so that the support layer 101 is not only rigid, but also has a certain ability to withstand deformation, and may be flexible to wind during the processing and use of the positive current collector 10 to better prevent breakage.

In some optional embodiments, the Young's modulus E of the support layer 101 may be 1.9 GPa, 2.5 GPa, 4 GPa, 5 GPa, 6 GPa, 7 GPa, 8 GPa, 9 GPa, 10 GPa, 11 GPa, 12 GPa, 13 GPa, 14 GPa , 15 GPa, 16 GPa, 17 GPa, 18 GPa, 19 GPa or 20 GPa. The range of the Young's modulus E of the support layer 101 may be composed of any two value mentioned above.

In some embodiments, preferably, a volume resistivity of the support layer 101 is greater than or equal to 1.0$\times$ $10^{-5}$ $\Omega\cdot$m. Due to the large volume resistivity of the support layer 101, in the case of abnormalities such as nail penetration on the electrochemical device, the short-circuit resistance when an internal short circuit occurs in the electrochemical device can be increased, thereby improving the nail penetration safety performance of the electrochemical device.

In some embodiments, preferably, the support layer 101 uses one or more of a polymer material and a polymer-based composite material. Since the density of the polymer material and the polymer-based composite material is significantly lower than that of metals, so that compared with traditional metal current collectors, the weight of the positive current collector 10 is significantly reduced, and the weight energy density of the electrochemical device is therefore increased.

The polymer material is selected from, for example, one or more of polyamide (PA), polyimide (PI), polyesters, polyolefins, polyyne, siloxane polymers, polyethers, polyalcohols, polysulfones, polysaccharide polymers, amino acid polymers, polysulfide nitrides, aromatic ring polymers, aromatic heterocyclic polymers, epoxy resins, phenolic resins, and derivatives, cross-linked products and copolymers thereof.

Further, the polymer material is selected from, for example, one or more of polycaprolactam (commonly known as nylon 6), polyhexamethylene adipamide (commonly known as nylon 66), poly-paraphenylene terephthalamide (PPTA), polyisophthaloyl metaphenylene diamine (PMIA), polyethylene terephthalate (PET), polybutylene terephthalate (PBT), polyethylene naphthalate (PEN), poly carbonate (PC), polyethylene (PE), polypropylene (PP), poly(phenylene-ethylene) (PPE), polyvinyl alcohol (PVA), polystyrene (PS), polyvinyl chloride (PVC), polyvinylidene fluoride (PVDF), polytetrafluoroethylene (PTEE), polystyrene sulfonate (PSS), polyacetylene, polypyrrole (PPy), polyaniline (PAN), polythiophene (PT), polypyridine (PPY), silicone rubber, polyoxymethylene (POM), polyphenylene, polyphenylene ether (PPO), polyphenylene sulfide (PPS), polyethylene glycol (PEG), acrylonitrile-butadiene-styrene copolymer (ABS), cellulose, starch, protein, and derivatives, cross-linked products and copolymers thereof.

The polymer-based composite material, for example, may include the polymer material and an additive. The Young's modulus of the polymer material may be adjusted by the additive. The additive may be one or more of a metallic material and an inorganic non-metallic material.

The metal material additive is, for example, one or more of aluminum, aluminum alloy, copper, copper alloy, nickel, nickel alloy, titanium, titanium alloy, iron, iron alloy, silver, and silver alloy.

The inorganic non-metallic material additive is selected from, for example, one or more of carbon-based material, alumina, silicon dioxide, silicon nitride, silicon carbide, boron nitride, silicate, and titanium oxide, and may also be selected from, for example, one or more of glass material, ceramic material and ceramic composite material. The carbon-based material is selected from, for example, one or more of graphite, superconducting carbon, acetylene black, carbon black, ketjen black, carbon dot, carbon nanotube, graphene, and carbon nanofiber.

In some embodiments, the additive may be metal-coated carbon-based material, for example, one or more of nickel-coated graphite powder and nickel-coated carbon fiber.

Preferably, the support layer 101 uses one or more of insulating polymer material and insulating polymer-based composite material. The support layer 101 has a relatively high volume resistivity, which can improve the safety performance of the electrochemical device.

Further preferably, the support layer 101 uses one or more of polyethylene terephthalate (PET), polybutylene terephthalate (PBT), polyethylene naphthalate (PEN), poly sodium styrene sulfonate (PSS) and polyimide (PI).

In the positive current collector 10 of the embodiments of the present application, the support layer 101 may have a single-layer structure or a composite layer structure of two or more layers, such as two layers, three layers, or four layers and so on.

As an example of the support layer 101 with the composite layer structure, referring to FIG. 3, the support layer 101 has a composite layer structure formed by stacking a first sublayer 1011, a second sublayer 1012, and a third sublayer 1013. The support layer 101 with the composite layer structure has a first surface 101a and a second surface 101b opposite to each other, and the metal conductive layer 102 is stacked on the first surface 101a and the second surface 101b of the support layer 101. Alternatively, the metal conductive layer 102 may be disposed only on the first surface 101a of the support layer 101, or only on the second surface 101b of the support layer 101.

When the support layer 101 has a composite layer structure of two or more layers, the materials of each sublayer may be the same or different.

In some embodiments, the material of the metal conductive layer 102 is preferably aluminum or aluminum alloy. The weight percentage content of the aluminum element in the aluminum alloy is preferably 90% or more. The above-mentioned aluminum alloy may be, for example, an aluminum-zirconium alloy.

When the material of the metal conductive layer 102 is aluminum or aluminum alloy, the density of the metal conductive layer 102 may be 2.0 g/cm$^3$ ~ 2.8 g/cm$^3$, such as 2.0 g/cm$^3$, 2.1 g/cm$^3$, 2.2 g/cm$^3$, 2.3 g/cm$^3$, 2.4 g/cm$^3$, 2.5g/cm$^3$, 2.52 g/cm$^3$, 2.55g/cm$^3$, 2.57 g/cm$^3$, 2.6 g/cm$^3$, 2.63 g/cm$^3$, 2.65 g/cm$^3$, 2.67 g/cm$^3$, 2.7 g/cm$^3$, 2.75 g/cm$^3$, 2.8 g/cm$^3$, etc. Preferably, when the material of the metal conductive layer 102 is aluminum or aluminum alloy, the density of the metal conductive layer 102 is 2.4 g/cm$^3$ ~ 2.8 g/cm$^3$, more preferably 2.5 g/cm$^3$ ~ 2.8 g/cm$^3$.

When the material of the metal conductive layer 102 is aluminum or aluminum alloy, the density of the metal conductive layer 102 is preferably 2.4 g/cm$^3$ ~ 2.8 g/cm$^3$, more preferably 2.5 g/cm$^3$ ~ 2.8 g/cm$^3$, which can ensure that the positive current collector 10 has good processing performance, conductivity and current collection performance, and improve the electrochemical performance of the electrochemical device.

In some embodiments, a volume resistivity of the metal conductive layer 102 is preferably $2.5 \times 10^{-8}$ Ω·m to $7.8 \times 10^{-8}$ Ω·m, more preferably $2.5 \times 10^{-8}$ Ω·m to $3.4 \times 10^{-8}$ Ω·m, which is conductive to making the positive current collector 10 have good conductivity and current collection performance, thereby improving the performance of the electrochemical device.

In some embodiments, when a tensile strain of the positive current collector 10 is 2%, the square resistance growth rate T of the metal conductive layer 102 is T≤10%, such as 10%, 9%, 8%, 7%, 6%, 5%, 4%, 3%, 2%, 1%, 0.5% or 0. Preferably, T≤5%. More preferably, T≤2%. More preferably, T≤1%.

The positive current collector 10 is sometimes stretched during the processing and use of the positive plate and the electrochemical device, such as the rolling of the plate or the expansion of the battery. When the tensile strain of the positive current collector 10 is 2%, the square resistance growth rate T of the metal conductive layer 102 is 10% or less, which can effectively prevent the metal conductive layer 102 from sharply increasing the resistance caused by the tensile deformation, ensure the positive current collector 10 has good electrical conductivity and current collecting performance, and make the electrochemical device have low impedance and low polarization, thereby enabling the electrochemical device to have high electrochemical performance, including higher rate capability and cycle performance.

In some embodiments, a thickness D$_1$ of the metal conductive layer 102 is preferably 300 nm≤D$_1$≤2 μm, such

as 2 $\mu$m, 1.8 $\mu$m, 1.5 $\mu$m, 1.2 $\mu$m, 1 $\mu$m, 900 nm, 800 nm, 700 nm, 600 nm, 500 nm, 450 nm, 400 nm, 350 nm or 300 nm. The range of the thickness $D_1$ of the metal conductive layer 102 may be composed of any two values mentioned above. Preferably, $D_1$ is 500 nm$\leq D_1 \leq$1.5 $\mu$m. More preferably, $D_1$ is 800 nm$\leq D_1 \leq$1.2 $\mu$m.

In some embodiments, the thickness of the metal conductive layer 102 is preferably 2 $\mu$m or less, more preferably 1.5 $\mu$m or less, more preferably 1.2 $\mu$m or less. The significantly reduced thickness of the metal conductive layer 102 is conductive to improving the weight energy density of the electrochemical device. And, in the case of abnormalities such as nail penetration in the electrochemical device, the burrs generated by the metal conductive layer 102 are greatly reduced, which increases the short-circuit resistance of the electrochemical device, reduces the short-circuit current and reduces short-circuit heat generation, thereby improving the safety performance of the electrochemical device. The thickness of the metal conductive layer 102 is preferably 300 nm or more, more preferably 500 nm or more, and more preferably 800 nm or more, which is conducive to making the positive current collector 10 have good conductivity and current collection performance, and not prone to be damaged during the processing and use of the positive current collector 10, thereby making the positive current collector 10 have good mechanical stability and a long service life.

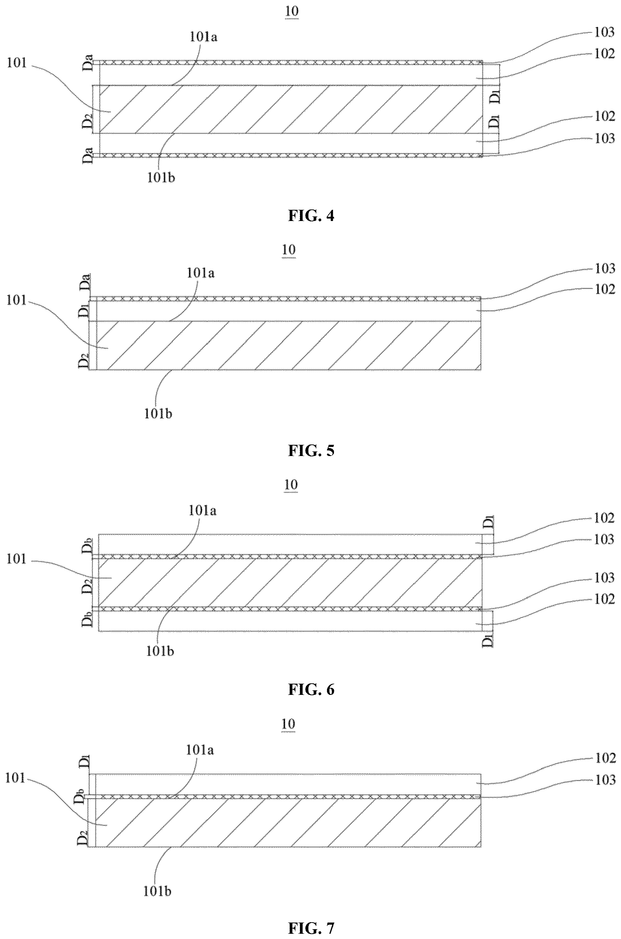

In some embodiments, referring to FIG. 4 to FIG. 9, the positive current collector 10 may optionally further include a protective layer 103. Specifically, the metal conductive layer 102 includes two opposite surfaces in its own thickness direction, and the protective layer 103 is stacked on either or both of the two surfaces of the metal conductive layer 102 to protect the metal conductive layer 102 and prevent the metal conductive layer 102 from such damages as chemical corrosion or mechanical damage, and ensure that the positive current collector 10 has high working stability and a long service life. In addition, the protective layer 103 may also enhance the mechanical strength of the positive current collector 10.

In some embodiments, a material of the protective layer 103 may be one or more of metal, metal oxide, and conductive carbon. Herein, the protective layer 103 using a metal material is a metal protective layer; the protective layer 103 using a metal oxide material is a metal oxide protective layer.

The metal is selected from, for example, one or more of nickel, chromium, nickel-based alloy, and copper-based alloy. The nickel-based alloy is an alloy formed by adding one or more other elements to pure nickel as a matrix, preferably a nickel-chromium alloy. The nickel-chromium alloy is an alloy formed by metallic nickel and metallic chromium. Optionally, a weight ratio of nickel to chromium in the nickel-chromium alloy is 1:99~99:1, such as 9:1. The copper-based alloy is an alloy formed by adding one or more other elements to pure copper as a matrix, preferably a nickel-copper alloy. Optionally, a weight ratio of nickel to copper in the nickel-copper alloy is 1:99~99:1, such as 9:1.

The metal oxide is, for example, one or more of aluminum oxide, cobalt oxide, chromium oxide, and nickel oxide.

The conductive carbon is, for example, one or more of graphite, superconducting carbon, acetylene black, carbon black, ketjen black, carbon dots, carbon nanotube, graphene, and carbon nanofiber, preferably one or more of carbon black, carbon nanotube, acetylene black and graphene.

As some examples, referring to FIG. 4 and FIG. 5, the positive current collector 10 includes a support layer 101, a metal conductive layer 102, and a protective layer 103 that are stacked. Herein, the support layer 101 has a first surface 101a and a second surface 101b opposite to each other in its own thickness direction, and the metal conductive layer 102 is stacked on at least one of the first surface 101a and the second surface 101b of the support layer 101. The protective layer 103 is stacked on a surface of the metal conductive layer 102 facing away from the support layer 101.

In some embodiments, the protective layer 103 (referred to as an upper protective layer for short) is disposed on the surface of the metal conductive layer 102 facing away from the support layer 101 to protect the metal conductive layer 102 from chemical corrosion and mechanical damage. The protective effect 103 can also improve the interface between the positive current collector 10 and the positive active material layer, increase a binding force between the positive current collector 10 and the positive active material layer, and improve the performance of the electrochemical device.

Further, in some embodiments, the upper protective layer is preferably a metal oxide protective layer, such as aluminum oxide, cobalt oxide, nickel oxide, chromium oxide, etc. With high hardness and mechanical strength, large specific surface area and good corrosion resistance, the metal oxide protective layer can better protect the metal conductive layer 102, enhance the binding force between the positive current collector 10 and the positive active material layer, and help to improve the overall strength of the positive current collector 10; in addition, the metal oxide protective layer also help to improve the nail penetration safety performance of the electrochemical device.

As other examples, referring to FIG. 6 and FIG. 7, the positive current collector 10 includes a support layer 101, a metal conductive layer 102, and a protective layer 103 that are stacked. Herein, the support layer 101 has a first surface 101a and a second surface 101b opposite to each other in its own thickness direction, and the metal conductive layer 102 is stacked on at least one of the first surface 101a and the second surface 101b of the support layer 101, the protective layer 103 is stacked on the surface of the metal conductive layer 102 facing the support layer 101.

In some embodiments, the protective layer 103 (referred to as a lower protective layer for short) is disposed on the surface of the metal conductive layer 102 facing the support layer 101, and the lower protective layer not only protects the metal conductive layer 102 from chemical corrosion and mechanical damage, but also improves the bonding force between the metal conductive layer 102 and the support layer 101, prevents the metal conductive layer 102 from separating from the support layer 101, and improves the support and protection effect of the support layer 101 on the metal conductive layer 102.

Further, in some embodiments, the lower protective layer is preferably a metal oxide protective layer, such as aluminum oxide, cobalt oxide, nickel oxide, chromium oxide, etc., can better play the protective role, further improve the bonding force between the metal conductive layer 102 and the support layer 101 and help to improving the overall strength of the positive current collector 10.

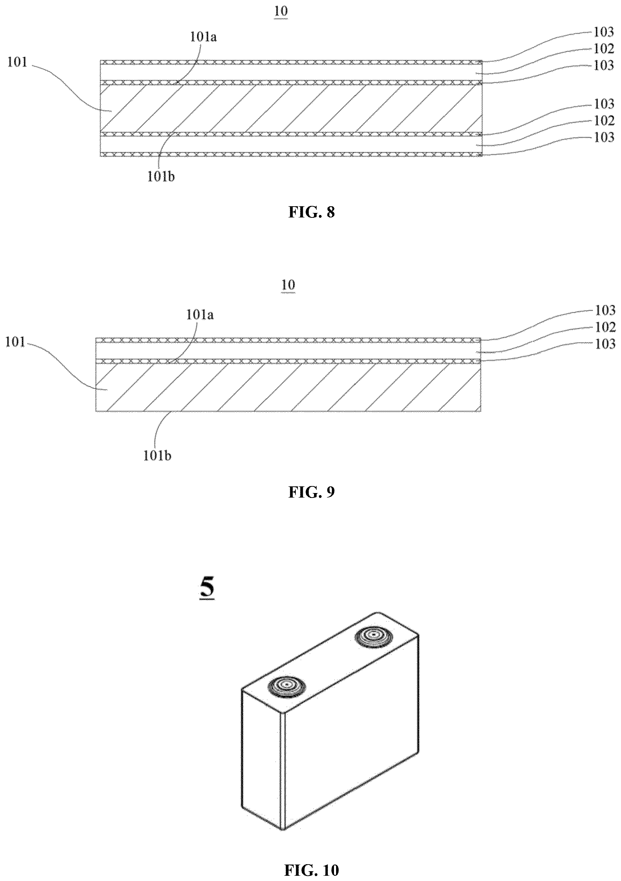

As still other examples, referring to FIG. 8 and FIG. 9, the positive current collector 10 includes a support layer 101, a metal conductive layer 102, and a protective layer 103 that are stacked. Herein, the support layer 101 has a first surface 101a and a second surface 101b opposite to each other in its own thickness direction, and the metal conductive layer 102 is stacked on at least one of the first surface 101a and the second surface 101b of the support layer 101. The protective layer 103 is stacked on the surfaces of the metal conductive layer 102 facing away from the support layer 101 and facing the support layer 101.

In some embodiments, the protective layer 103 is provided on both surfaces of the metal conductive layer 102, that is, an upper protective layer and a lower protective layer are respectively disposed on the two surfaces of the metal conductive layer 102, so as to more fully protect the metal conductive layer 102. Further, the upper protective layer and the lower protective layer are both metal oxide protective layers.

It can be understood that the protective layers 103 on the two surfaces of the metal conductive layer 102 may have the same or different materials, and also may have the same or different thicknesses.

Preferably, the thickness $D_3$ of the protective layer 103 is 1 nm$\leq$D3$\leq$200 nm, and $D_3 \leq 0.1 D_1$. When the thickness $D_3$ within the above ranges, the protective layer 103 may effectively protect the metal conductive layer 102 and enable the electrochemical device to have a high energy density at the same time.

In some embodiments, the thickness $D_3$ of the protective layer 103 may be 200 nm, 180 nm, 150 nm, 120 nm, 100 nm, 80 nm, 60 nm, 55 nm, 50 nm, 45 nm, 40 nm, 30 nm, 20 nm, 18 nm, 15 nm, 12 nm, 10 nm , 8 nm, 5 nm, 2 nm, 1 nm, etc.. The range of the thickness $D_3$ of the protective layer 103 may be composed of any two values mentioned above. Preferably, 5 nm$\leq$D_3$\leq$200 nm. More preferably, 10 nm$\leq$D_3$\leq$200 nm.

Further, when both surfaces of the metal conductive layer 102 are provided with protective layers 103, the thickness $D_a$ of the upper protective layer is 1 nm$\leq$D_a$\leq$200nm and $D_a \leq 0.1D1$, and the thickness $D_b$ of the lower protective layer is 1nm $\leq$D_b$\leq$200nm, and $D_b \leq 0.1D1$. Preferably, the relationship between $D_a$ and $D_b$ satisfies $D_a > D_b$, which is beneficial for the protective layer 103 to have a good protective effect on the metal conductive layer 102 and enables the electrochemical device to have a higher energy density. More preferably, $0.5D_a \leq D_b \leq 0.8D_a$.

In some embodiments, the metal conductive layer 102 may be formed on the support layer 101 by at least one of mechanical rolling, bonding, vapor deposition, electroless plating, and electroplating. Herein, vapor deposition or electroplating is preferred, that is, the metal conductive layer 102 is preferably a vapor deposition layer or an electroplating layer, which can improve the bonding force between the metal conductive layer 102 and the support layer 101, and effectively play the supporting role of the support layer 101 on the metal conductive layer 102.

Preferably, the bonding force between the support layer 101 and the metal conductive layer 102 is F$\geq$100 N/m, more preferably F$\geq$400 N/m.

For example, the metal conductive layer 102 is formed on the support layer 101 by vapor deposition. The ratio of the density of the metal conductive layer 102 to the intrinsic density of the material of the metal conductive layer 102 may be made to meet the above-mentioned requirement by reasonably regulating the process parameters of vapor deposition, such as deposition temperature, deposition rate, and atmospheric conditions in the deposition chamber. Furthermore, when the positive current collector 10 is stretched, the square resistance growth rate of the metal conductive layer 102 may be made to meet the above-mentioned requirement.

The vapor deposition is preferably a physical vapor deposition (PVD). The physical vapor deposition is preferably at least one of evaporation and sputtering; the evaporation is preferably at least one of vacuum evaporation, thermal evaporation, and electron beam evaporation, and the sputtering is preferably a magnetron sputtering.

As an example, the process of forming the metal conductive layer 102 by vacuum evaporation includes: placing the support layer 101 after a surface cleaning treatment in a vacuum plating chamber, melting and evaporating a metal wire with high purity in the metal evaporation chamber at a high temperature of 1300°C~2000°C, and making an evaporated metal pass through the cooling system in the vacuum plating chamber and finally depositing on the support layer 101 to form the metal conductive layer 102.

The process of forming the metal conductive layer 102 by mechanical rolling may include: placing an aluminum sheet or aluminum alloy sheet in a mechanical roller, rolling it to a predetermined thickness by applying a pressure of 20 t~40 t, placing it on the surface of the support layer 101 that has undergone surface cleaning treatment, placing the two in a mechanical roller, and making the two tightly combined by applying a pressure of 30t ~ 50t.

The process of forming the metal conductive layer 102 by bonding may include: placing an aluminum sheet or aluminum alloy sheet in a mechanical roller, and rolling it to a predetermined thickness by applying a pressure of 20 t~40 t; and then coating the surface of the support layer 101 that has undergone cleaning treatment with a mixed solution of polyvinylidene fluoride (PVDF) and N-methylpyrrolidone (NMP); finally, bonding the metal conductive layer 102 with a predetermined thickness to the surface of the support layer 101 and drying them to make the two closely combined.

In some embodiments, when the positive current collector 10 has the protective layer 103, the protective layer 103 may be formed on the metal conductive layer 102 by at least one of vapor deposition, in-situ formation method, and coating method. The vapor deposition may be the vapor deposition as described above. The in-situ formation is preferably an in-situ passivation method, such as a method of forming a metal oxide passivation layer in situ on the metal surface. The coating method is preferably at least one of roll coating, extrusion coating, scraper coating, and gravure coating.

Preferably, the protective layer 103 is formed on the metal conductive layer 102 by at least one of the vapor deposition method and the in-situ formation method, which is conductive to making the metal conductive layer 102 and the protective layer 103 have a high bonding force, so as to better play the protective role of the protective layer 102 on the positive current collector 10, and ensure the positive current collector 10 to have high working performance.

In the embodiments of the present application, the tensile strain of the positive current collector is set to $\varepsilon$, then $\varepsilon = \Delta L/L \times 100\%$, here $\Delta L$ is the elongation amount caused by the positive current collector being stretched, and L is the original length of the positive electrode collector, that is, the length before being stretched.

When the tensile strain $\varepsilon$ of the positive current collector is 2%, the square resistance growth rate T of the metal conductive layer may be measured by a method known in the existing technology. As an example, the positive current collector is cut into a sample of 20 mm $\times$ 200 mm. The square resistance of the central area of the sample is tested by a four-probe method, and denoted as $R_1$. Then a high-speed rail tensile machine is used to stretch the central area of the sample, an initial position is set, and the sample length between the clamps is made to be 50 mm. The central area of the sample is stretched at a speed of 50 mm/min, and the stretch distance is 2% of the original length of the sample. The stretched sample is removed and the square resistance of the metal conductive layer between the clamps is tested and denoted as $R_2$. According to the formula $T = (R_2 - R_1)/R_1 \times 100\%$, when the tensile strain of the positive current collector is 2%, the square resistance growth rate T of the metal conductive layer is calculated.

The method of using the four-probe method to test the square resistance of the metal conductive layer is as follows. The RTS-9 double-electric four-probe tester is used in a test environment with normal temperature $23 \pm 2°C$, 0.1MPa, relative humidity $\leq 65\%$. During the test, the sample is subjected to a surface cleaning, and is placed horizontally on the test bench. The four probes are put down to make good contact with the surface of the metal conductive layer. The automatic test mode is adjusted to calibrate the current range of the sample to the appropriate current range, and then the square resistance is measured. 8 to 10 data points of the same sample is collected to make the data measurement accuracy and error analysis. Finally, the average value is taken and recorded as the square resistance value of the metal conductive layer.

The volume resistivity of the metal conductive layer is set to $\rho$, then $\rho = R_S \times d$, here the unit of $\rho$ is $\Omega \cdot m$; $R_S$ is the square resistance of the metal conductive layer, the unit is $\Omega$; d is the thickness of the metal conductive layer and the unit is m. The square resistance $R_S$ of the metal conductive layer may be tested with reference to the four-probe method described above, which will not be repeated here.

The Young's modulus E of the support layer may be measured using methods known in the existing technology. As an example, the support layer is cut into a sample of 15 mm $\times$ 200 mm, a thickness $l$ ($\mu$m) of the sample is measured with a tenthousandth micrometer, and a high-speed rail tensile machine is used to perform a tensile test under normal temperature and pressure (25 °C, 0.1MPa). An initial position is set to make the sample between the clamps to be 50 mm. At the tensile speed of 50 mm/min, a tensile load Q (N) and an equipment displacement z(mm) when the fracture occurs are recorded, then the stress $\xi$ (GPa)= Q/(15xl), strain $\eta$ = z/50. A stress-strain curve is drawn, the initial linear region curve is taken, and the slope of this curve is the Young's modulus E.

The volume resistivity of the support layer is the volume resistivity at 20°C, and may be measured by methods known in the existing technology. As an example, a test is carried out in a room with constant temperature, normal pressure and low humidity (20°C, 0.1MPa, RH $\leq 20\%$), and a wafer support layer sample with a diameter of 20 mm is prepared (the sample size may be adjusted according to the actual size of the test instrument). Using an insulation resistance tester (with an accuracy of 10 $\Omega$), the test is performed by a three-electrode surface resistivity measurement method (GB/T 1410-2006). The test method is as follows: placing the wafer sample between two electrodes and applying a potential difference between the two electrodes. The current generated will be distributed in the body of the wafer sample and measured by a picoammeter or electrometer in order to avoid the measurement error caused by including the surface leakage current in the measurement. The reading is the volume resistivity in $\Omega \cdot m$.

A method known in the existing technology may be used to test a binding force F between the support layer and the metal conductive layer. For example, the positive current collector with the metal conductive layer disposed on one surface of the support layer is selected as the sample to be tested, and the width h is 0.02 m. Under normal temperature and pressure (25°C, 0.1 MPa), 3 M double-sided tape is evenly pasted on the stainless steel plate, the sample to be tested is evenly pasted on the double-sided tape, and then the high-speed rail tension machine is used to remove the metal conductive layer of the sample to be tested from the support layer. The maximum tensile force x (N) is read according to the data graph of tensile force and displacement, and the bonding force F (N/m) between the metal conductive layer and the support layer is calculated according to F = x/h.

**Positive plate**

Embodiments of the second aspect of the present application provides a positive plate including a positive current collector and a positive active material layer that are stacked, where the positive current collector is the positive current collector 10 of the first aspect of the embodiments of the present application.

The positive plate of the embodiments of the present application, due to adopting the positive current collector 10 of the first aspect of the embodiment of the present application, has a lower weight and higher electrochemical performance than a traditional positive plate.

As an example, the positive plate includes a support layer 101, a metal conductive layer 102, and a positive active material layer that are stacked, where the support layer 101 includes a first surface 101a and a second surface 101b opposite to each other, the metal conductive layer 102 is disposed on the first surface 101a and/or the second surface 101b of the support layer 101, and the positive active material layer is disposed on a surface of the metal conductive layer 102 facing away from the support layer 101.

In the positive plates of the embodiments of the present application, the positive active material layer may adopt a positive active material known in the existing technology which may perform reversible intercalation/deintercalation of active ions.

For example, the positive active material used in a lithium-ion secondary battery may be a lithium transition metal composite oxide, herein the transition metal may be one or more of Mn, Fe, Ni, Co, Cr, Ti, Zn, V, Al, Zr, Ce and Mg. The lithium transition metal composite oxide may also be doped with elements with high electronegativity, such as one or more of S, F, Cl and I, which may make the positive active material have high structural stability and electrochemical performance. As an example, the lithium transition metal composite oxide is, for example, one or more of $LiMn_2O_4$, $LiNiO_2$, $LiCoO_2$, $LiNi_{1-y}Co_yO_2$ (0<y<1), $LiNi_aCo_bAl_{1-a-b}O_2$ (0<a<1 , 0<b<1 , 0<a+b<1), $LiMn_{1-m-n}Ni_mCo_nO_2$ (0<m<1, 0<n<1, 0<m+n<1), $LiMPO_4$ (M may be one or more of Fe, Mn, Co) and $Li_3V_2(PO_4)_3$.

Optionally, the positive active material layer may further include a conductive agent. As an example, the conductive agent is selected from one or more of graphite, superconducting carbon, acetylene black, carbon black, ketjen black, carbon dot, carbon nanotube, graphene, and carbon nanofiber.

Optionally, the positive active material layer may further include a binder. As an example, the binder is one or more of styrene butadiene rubber (SBR), water-based acrylic resin, carboxymethyl cellulose (CMC), polyvinylidene fluoride (PVDF), polytetrafluoroethylene (PTFE), ethylene-vinyl acetate copolymer (EVA), polyvinyl alcohol (PVA) and polyvinyl butyral (PVB).

The positive plate may be prepared according to conventional methods in the existing technology. Generally, the positive active material, optional conductive agent and binder are dispersed in a solvent (such as N-methylpyrrolidone, referred to as NMP) to form uniform positive electrode slurry, and the positive electrode slurry is coated on the positive current collector. After drying and other processes, the positive plate is obtained.

**Electrochemical device**

Embodiments of the third aspect of the present application provide an electrochemical device. The electrochemical device includes a positive plate, a negative plate, a separator, and an electrolyte, herein the positive plate is the positive plate of the second aspect of the embodiments of the present application.

The electrochemical device may be a lithium-ion secondary battery, a lithium primary battery, a sodium ion battery, a magnesium ion battery, etc., but is not limited thereto.

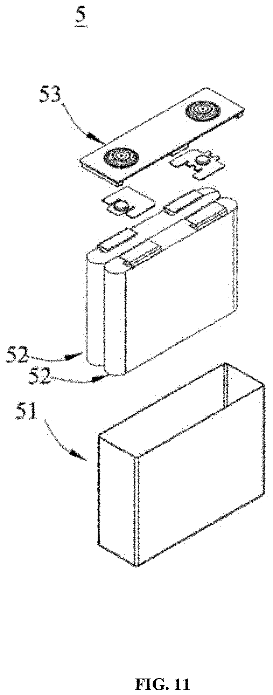

FIG. 10 shows a perspective view of an electrochemical device as a lithium-ion secondary battery according to a specific embodiment of the present invention, and FIG. 11 is an exploded view of the lithium-ion secondary battery shown in FIG. 10. Referring to FIG. 10 and FIG. 11, the lithium-ion secondary battery 5 (hereinafter referred to as the battery cell 5) according to the present application includes an outer package 51, an electrode assembly 52, a top cover assembly 53, and an electrolyte (not shown). The electrode assembly 52 is contained in the outer package 51, and the number of the electrode assembly 52 is not limited, and may be one or more.

It should be noted that the battery cell 5 shown in FIG. 10 is a can-type battery, but the present application is not limited to this. The battery cell 5 may be a pouch-type battery, that is, the outer package 51 is replaced by a metal plastic film and the top cover assembly 53 is canceled.

Since the electrochemical device adopts the positive plate provided according to the second aspect of the embodiments of the present application, which makes the electrochemical device of the embodiments of the present application has a high weight energy density and electrochemical performance.

The negative plate may include an anode current collector and a negative active material layer.

In the embodiments of the present application, the anode current collector may be a metal foil or porous metal foil including one or more of copper, copper alloy, nickel, nickel alloy, iron, iron alloy, titanium, titanium alloy, silver, and silver alloy.

In the embodiments of the present application, the negative active material layer may adopt a negative active material known in the existing technology, which may perform reversible intercalation/deintercalation of active ions.

In the embodiments of the present application, the negative active material used in the lithium-ion secondary battery may be one or more of metallic lithium, natural graphite, artificial graphite, mesophase carbon microspheres (abbreviated as MCMB), hard carbon, soft carbon, silicon, silicon-carbon composite, SiO, Li-Sn alloy, Li-Sn-O alloy, Sn, SnO, $SnO_2$, lithium titanate having a spinel structure, and Li-Al alloy.

Optionally, the negative active material layer may further include a binder. As an example, the binder is selected from one or more of styrene butadiene rubber (SBR), water-based acrylic resin, carboxymethyl cellulose (CMC), polyvinylidene fluoride (PVDF), polytetrafluoroethylene (PTFE), ethylene-vinyl acetate copolymer (EVA), polyvinyl alcohol (PVA) and polyvinyl butyral (PVB).

Optionally, the negative active material layer may further include a conductive agent. As an example, the conductive agent is selected from one or more of graphite, superconducting carbon, acetylene black, carbon black, ketjen black, carbon dot, carbon nanotube, graphene, and carbon nanofiber.

In the embodiments of the present application, the negative plate may be prepared according to a conventional method in the existing technology. Generally, the negative active material and optional conductive agent and binder are dispersed in a solvent which may be NMP or deionized water, to form uniform negative slurry. The negative slurry is coated on the anode current collector. After drying and other processes, the negative plate is obtained.

There is no particular limitation on the separator, and any well-known porous structure separator with electrochemical stability and chemical stability may be selected, such as one or more of single-layer or multi-layer films of glass fiber, non-woven fabric, polyethylene, polypropylene and polyvinylidene fluoride.

The electrolyte includes an organic solvent and an electrolyte salt. As a medium for transporting ions in an electrochemical reaction, the organic solvent may adopt organic solvents known in the existing technology for use in the electrolyte of the electrochemical device. As a source of ions, the electrolyte salt may be an electrolyte salt known in the existing technology for use in the electrolyte of the electrochemical device.

In the embodiments of the present application, the organic solvent used in the lithium-ion secondary battery may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfone (MSM), methyl ethyl sulfone (EMS), ethylsulfonyethane (ESE).

For example, the electrolyte salt used in lithium-ion secondary batteries may be selected from one or more of $LiPF_6$ (lithium hexafluorophosphate), $LiBF_4$ (lithium tetrafluoroborate), $LiClO_4$ (lithium perchlorate), $LiAsF_6$ (lithium hex-afluoroarsenate), LiFSI (lithium bis(fluorosulfonyl)imide), LiTFSI (lithium bis(trifluoromethanesulphonyl)imide), LiTFS (lithium trifluoromethanesulfonate), LiDFOB (lithium difluoro(oxalato)borate), LiBOB (lithium bis(oxalate)borate), $LiPO_2F_2$ (lithium difluorophosphate), LiDFOP (lithium difluorodioxalate phosphate) and LiTFOP (lithium tetrafluorooxalate phosphate).

In the embodiments of the present application, the positive plate, the separator, and the negative plate are stacked in order, the separator is located between the positive plate and the negative plate for isolation, and a battery cell is obtained. The battery cell may be obtained after winding. The electrochemical device is prepared by placing the battery cell in a packaging shell, injecting electrolyte and sealing it.

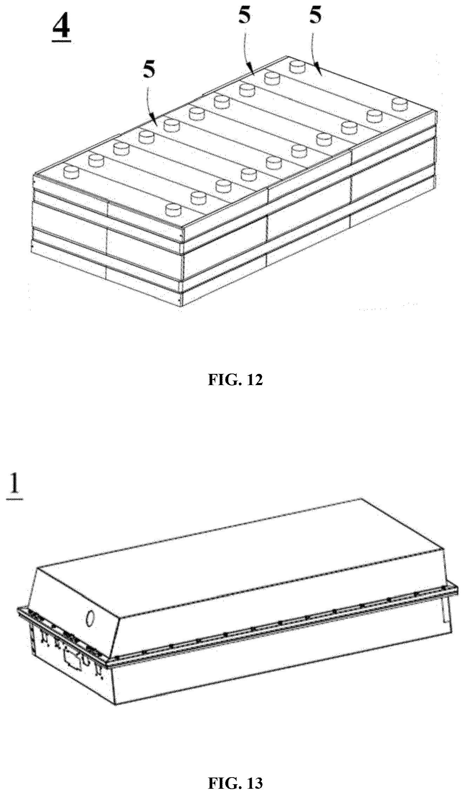

In some embodiments, the lithium-ion secondary battery may be assembled into a battery module, and the number of lithium-ion secondary batteries contained in the battery module may be multiple, and the specific number may be adjusted according to the application and capacity of the battery module. FIG. 12 shows a battery module 4 as an example. Referring to FIG. 12, in the battery module 4, multiple lithium-ion secondary batteries 5 may be arranged in sequence along the length direction of the battery module 4. Alternatively, the multiple lithium-ion secondary batteries 5 may also be arranged in any other manner. Furthermore, the multiple lithium-ion secondary batteries 5 may be fixed by fasteners. Optionally, the battery module 4 may further include a housing having an accommodating space, and the multiple lithium-ion secondary batteries 5 are accommodated in the accommodating space.

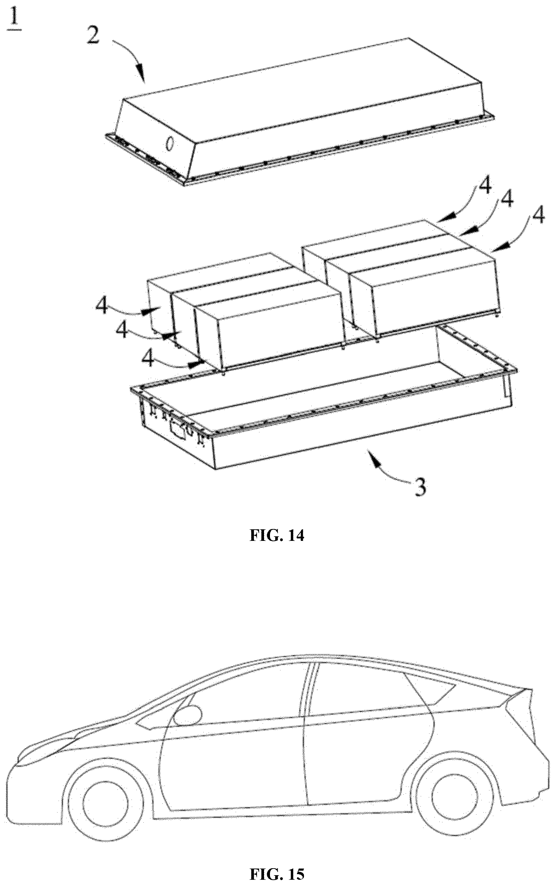

In some embodiments, the battery modules may also be assembled into a battery pack, and the number of battery modules contained in the battery pack may be adjusted according to the application and capacity of the battery pack. FIG. 13 and FIG. 14 show a battery pack 1 as an example. Referring to FIG. 13 and FIG. 14, the battery pack 1 may include a battery box and multiple battery modules 4 disposed in the battery box. The battery box includes an upper box 2 and a lower box 3. The upper box 2 may cover on the lower box 3 and forms a closed space for accommodating the battery module 4. The multiple battery modules 4 may be arranged in the battery box in any manner.

**Apparatus**

Embodiments of the third aspect of the present application provide a device, including the electrochemical device described in the second aspect of the present application. The electrochemical device may be used as a power source for the apparatus or as an energy storage unit of the apparatus. The apparatus includes, but is not limited to, mobile devices (such as mobile phones, laptop computers, etc.), electric vehicles (such as pure electric vehicles, hybrid electric vehicles, plug-in hybrid electric vehicles, electric bicycles, electric scooters, electric golf carts, electric trucks, etc.), electric trains, ships and satellites, energy storage systems, etc.

The apparatus may select a lithium-ion secondary battery, a battery module, or a battery pack according to its use requirements.

FIG. 15 shows a schematic diagram of an apparatus according to a specific embodiment of the present application. The apparatus may be a pure electric vehicle, a hybrid electric vehicle, or a plug-in hybrid electric vehicle. In order to meet the high power and high energy density requirements of the lithium-ion secondary battery (i.e., the electrochemical device of the present application) for the apparatus, a battery pack or a battery module may be used.

As another example, the apparatus may be a mobile phone, a tablet computer, a notebook computer, or the like. The apparatus is generally required to be light and thin, and a lithium-ion secondary battery (i.e., the electrochemical device of the present application) may be used as a power source.

Those skilled in the art can understand: various limitations or preferred ranges for the component selection, component content, and material physical and chemical performance parameters of the plate, electrode active material layer, etc., in the different embodiments of the present application mentioned above may be combined arbitrarily, and various embodiments obtained by the combination are still within the scope of the present application, and are regarded as a part of the disclosure of this specification.

Unless otherwise specified, the various parameters involved in this specification have general meanings known in the existing technology, and may be measured according to methods known in the existing technology. For example, the test may be performed according to the method given in the embodiments of the present application. In addition, the preferred ranges and options of various different parameters given in various preferred embodiments can be combined arbitrarily, and various combinations obtained therefrom are deemed to be within the scope of the disclosure of the present application.

The following examples further illustrate the advantages of the present application.

**Examples**

The following examples more specifically describe the content of the present application and these examples are only used for illustrative description, because various modifications and changes within the scope of the present application are obvious for those skilled in the art. Unless otherwise stated, all parts, percentages, and ratios reported in the following examples are based on weight, and all reagents used in the examples are commercially available or obtained by conventional synthesis methods, and may be directly used without further processing. The instruments used in the examples are all commercially available.

**Preparation method**

Preparation of positive current collector

A support layer with a predetermined thickness is selected and is subjected to a surface cleaning treatment. After the surface cleaning treatment, the support layer is placed in a vacuum coating chamber, and a high-purity aluminum wire in the metal evaporation chamber is melted and evaporated at a high temperature of 1300°C~2000°C. The evaporated aluminum passes through the cooling system in the vacuum coating chamber and is finally deposited on two surfaces of the support layer to form a conductive layer.

The material and thickness of the conductive layer, the preparation process conditions (such as vacuum, atmosphere, humidity, temperature, etc.), and the material and thickness of the support layer may be adjusted to make a ratio of the density of the metal conductive layer to the intrinsic density of the material of the metal conductive layer has different values, and make the positive current collectors have different T values.

Preparation of positive plate

The positive active material $LiNi_{1/3}Co_{1/3}Mn_{1/3}O_2$ (abbreviated as NCM333), conductive carbon black, and binder polyvinylidene fluoride (PVDF) are fully stirred and mixed in an appropriate amount of N-methypyrrolidone (NMP) solvent N-form in a weight ratio of 93:2:5, to form uniform positive electrode slurry. The positive electrode slurry is coated on the positive current collector, and after drying and other processes, a positive plate is obtained.

Conventional positive current collector

Aluminum foil with a thickness of 12 $\mu$m.

Conventional positive plate

Different from the positive plate of the embodiments of the present application, a conventional positive current collector is used.

Anode current collector

Copper foil with a thickness of 8 $\mu$m.

Preparation of negative plate

The negative active material graphite, conductive carbon black, thickener sodium carboxymethyl cellulose (CMC), binder styrene butadiene rubber emulsion (SBR) are fully stirred and mixed in an appropriate amount of deionized water in a weight ratio of 96.5:1.0:1.0:1.5 to form a uniform negative slurry. The negative slurry is coated on the anode current collector, and after drying and other processes, a negative plate is obtained.

Preparation of electrolyte

Ethylene carbonate (EC) and ethyl methyl carbonate (EMC) in a volume ratio of 3:7 are uniformly mixed to obtain an organic solvent, and then 1 mol/L of $LiPF_6$ is uniformly dissolved in the organic solvent.

Preparation of lithium-ion secondary battery

The positive plate, the separator (PP/PE/PP composite film), and the negative plate are stacked in sequence, and then wound into a battery cell and packed into a packaging shell, and the electrolyte is injected into the battery cell, After that, a lithium-ion secondary battery is obtained through processes such as sealing, standing, hot and cold pressing, and forming.

**Test method**

1. Positive current collector test

(1) Electrical performance test

An overcurrent test is performed on the positive current collector. The positive current collector is cut into a width of 100 mm, and a positive active material layer of 80 mm width is coated at the center of the width direction and rolled into a positive plate. The rolled plates are cut into strips of 100 mm×30 mm along the width direction, and 10 pieces of each plate are cut. During the test, the non-coated conductive areas on both sides of the plate sample are connected to the positive and negative terminals of the charging and discharging machine, and then the charging and discharging machine is set up to pass 1A current through the plates. The test is considered to be passed if the plates may be kept without melting for 10 seconds. Otherwise it is regarded as not passed. 10 samples are tested in each group.
(2) Other tests are performed on the positive current collector according to the test method described above.

2. Battery cycle performance test

At 45°C, the lithium-ion secondary battery is charged to 4.2V at a constant current rate of 1C, then charged at a constant voltage until the current is less than or equal to 0.05C, and then discharged at a constant current rate of 1C to 2.8V, which is one charge and discharge cycle. The discharge capacity this time is the discharge capacity of the first cycle. The battery is subjected to 1000 charging-discharging cycles according to this method, and the discharge capacity of the 1000th cycle is recorded.

[0182]    Capacity retention rate (%) of lithium-ion secondary battery after 1000 cycles of 1C/1C at 45°C = discharge capacity of 1000th cycle/discharge capacity of 1st cycle×100%

**Test result**

1. The electrical performance of the positive current collector of the present application

Table 1

| No. | Mental Conducting Layer | | | | | | Support Layer | | T % |
|---|---|---|---|---|---|---|---|---|---|
| | Material | $D_1$ μm | $\rho_1$ g/cm$^3$ | $\rho_2$ g/cm$^3$ | Ratio | Volume Resistance Ω·m | Material | E GPa | |
| Positive current collector 1 | A1 | 2.0 | 2.65 | 2.7 | 0.98 | $3.2×10^{-8}$ | PET | 4.2 | 0 |
| Positive current collector 2 | A1 | 1.5 | 2.65 | 2.7 | 0.98 | $3.2×10^{-8}$ | PET | 4.2 | 0 |
| Positive current collector 3 | A1 | 1.2 | 2.4 | 2.7 | 0.89 | $7.2×10^{-8}$ | PET | 4.2 | 81 |
| Positive current collector 4 | A1 | 1.0 | 2.65 | 2.7 | 0.98 | $3.2×10^{-8}$ | PET | 4.2 | 0 |
| Positive current collector 5 | A1 | 0.9 | 2.52 | 2.7 | 0.93 | $4.7×10^{-8}$ | PET | 4.2 | 49 |
| Positive current collector 6 | A1 | 0.9 | 2.57 | 2.7 | 0.95 | $4.1×10^{-8}$ | PPS | 4.0 | 20 |
| Positive current collector 7 | A1 | 0.9 | 2.61 | 2.7 | 0.97 | $3.7×10^{-8}$ | PEN | 5.1 | 10 |
| Positive current collector 8 | A1 | 0.9 | 2.65 | 2.7 | 0.98 | $3.2×10^{-8}$ | PI | 1.9 | 0 |
| Positive current collector 9 | A1 | 0.9 | 2.7 | 2.7 | 1 | $2.7×10^{-8}$ | PP | 2.2 | 0 |
| Positive current collector 10 | A1 | 0.8 | 2.5 | 2.7 | 0.93 | $5.0×10^{-8}$ | PET | 4.2 | 53 |
| Positive current collector 11 | A1 | 0.6 | 2.65 | 2.7 | 0.98 | $3.2×10^{-8}$ | PEN | 5.1 | 1 |
| Positive current collector 12 | A1 | 0.5 | 2.65 | 2.7 | 0.98 | $3.2×10^{-8}$ | PEN | 5.1 | 2 |
| Positive current collector 13 | A1 | 0.3 | 2.65 | 2.7 | 0.98 | $3.2×10^{-8}$ | PEN | 5.1 | 5 |
| Positive current collector 14 | Al alloy | 0.9 | 2.8 | 2.8 | 1 | $2.9×10^{-8}$ | PPS | 4.0 | 3 |
| Positive current collector 15 | Ni | 0.9 | 8.7 | 8.9 | 0.98 | $3.3×10^{-8}$ | PPS | 4.0 | 51 |
| Conventional positive current collector | A1 | 12 | 2.69 | 2.7 | 1 | $2.8×10^{-8}$ | / | / | / |
| Comparative current collector 1 | A1 | 0.9 | 1.85 | 2.7 | 0.69 | $9.1×10^{-8}$ | PET | 4.2 | 260 |

(continued)

| No. | Mental Conducting Layer | | | | | | Support Layer | | T % |
|---|---|---|---|---|---|---|---|---|---|
| | Material | $D_1$ $\mu$m | $\rho_1$ g/cm$^3$ | $\rho_2$ g/cm$^3$ | Ratio | Volume Resistance $\Omega \cdot$m | Material | E GPa | |
| Comparative current collector 2 | A1 | 0.9 | 2.3 | 2.8 | 0.82 | $15.1 \times 10^{-8}$ | PET | 4.2 | 210 |

In Table 1:
The ratio is a ratio of the density $\rho_1$ of the metal conductive layer to the intrinsic density $\rho_2$ of the material of the metal conductive layer.

Aluminum alloy 7049 (aluminum-zinc alloy, Finkl Steel, USA) is used as the aluminum alloy.

In the positive current collectors 1 to 15 and the comparative current collectors 1 to 2, the thickness of the support layer is 10 $\mu$m, and the volume resistivity of the support layer is $2.1 \times 10^{14}$ $\Omega \cdot$m.

An Electrical performance test is performed on the current collectors in Table 1, and the test results are shown in Table 2 below.

Table 2

| Positive plate No. | Positive current collector No. | Pass rate of overcurrent test % |
|---|---|---|
| Positive plate 1 | Positive current collector 1 | 100 |
| Positive plate 2 | Positive current collector 2 | 100 |
| Positive plate 3 | Positive current collector 3 | 60 |
| Positive plate 4 | Positive current collector 4 | 100 |
| Positive plate 5 | Positive current collector 5 | 80 |
| Positive plate 6 | Positive current collector 6 | 90 |
| Positive plate 7 | Positive current collector 7 | 100 |
| Positive plate 8 | Positive current collector 8 | 100 |
| Positive plate 9 | Positive current collector 9 | 100 |
| Positive plate 10 | Positive current collector 10 | 80 |
| Positive plate 11 | Positive current collector 11 | 100 |
| Positive plate 12 | Positive current collector 12 | 100 |
| Positive plate 13 | Positive current collector 13 | 100 |
| Positive plate 14 | Positive current collector 14 | 100 |
| Positive plate 15 | Positive current collector 15 | 80 |
| Conventional positive plate | Conventional positive current collector | 100 |
| Comparative positive plate 1 | Comparative current collector 1 | 0 |
| Comparative positive plate 2 | Comparative current collector 2 | 0 |

From the data in Table 2, it can be seen that when the ratio of the density of the metal conductive layer to the intrinsic density of the material of the metal conductive layer is less than 0.89, the electrical performance of the positive current collector is poor. For example, the pass rate of the comparative plate 1~ 2 in the over-current test is low, so they have little practical value in battery products. In the positive current collector of the embodiments of the present application, the ratio of the density of the metal conductive layer to the intrinsic density of the material of the metal conductive layer is above 0.89, the electrical performance of the positive current collector is good, and its pass rate in the overcurrent test is significantly improved to 100%.

Further, when the tensile strain of the positive current collector is 2%, and the square resistance growth rate T of the metal conductive layer is less than 10%, the electrical performance of the positive current collector is better, and the pass rate in the overcurrent test is higher. Preferably, T≤5%. Preferably, T≤2%. More preferably, T≤1%.

Therefore, the electrochemical performance of the battery may be improved by using the positive current collector of the embodiments of the present application.

2. The influence of protective layer on electrochemical performance of electrochemical device

Table 3

| No. | Lower Protective Layer | | Upper Protective Layer | |
|---|---|---|---|---|
| | Material | $D_b$ (nm) | Material | $D_a$ (nm) |
| Positive current collector 4 | / | / | / | / |
| Positive current collector 4-1 | / | / | Ni | 1 |
| Positive current collector 4-2 | / | / | Nickel oxide | 10 |
| Positive current collector 4-3 | / | / | Aluminum oxide | 50 |
| Positive current collector 4-4 | / | / | Nickel oxide | 100 |
| Positive current collector 4-5 | Ni | 5 | / | / |
| Positive current collector 4-6 | Aluminum oxide | 20 | / | / |
| Positive current collector 4-7 | Aluminum oxide | 80 | / | / |
| Positive current collector 4-8 | Aluminum oxide | 100 | / | / |
| Positive current collector 4-9 | Ni | 5 | Ni | 10 |
| Positive current collector 4-10 | Nickel oxide | 8 | Aluminum oxide | 10 |
| Positive current collector 4-11 | Aluminum oxide | 20 | Aluminum oxide | 50 |
| Positive current collector 4-12 | Nickel oxide | 30 | Aluminum oxide | 50 |
| Positive current collector 4-13 | Aluminum oxide | 50 | Aluminum oxide | 100 |

In Table 3, the positive current collectors 4-1~ 4-13 are all set protective layers based on the positive current collector 4.

Table 4

| Battery No. | Positive current collector No. | Capacity retention ratio after 1000 cycles at 45°C, 1C/1C (%) |
|---|---|---|
| Conventional battery 1 | Conventional positive current collector | 86.5 |
| Battery 4 | Positive current collector 4 | 77.3 |
| Battery 4-1 | Positive current collector 4-1 | 78.1 |
| Battery 4-2 | Positive current collector 4-2 | 79.4 |
| Battery 4-3 | Positive current collector 4-3 | 79.9 |
| Battery 4-4 | Positive current collector 4-4 | 78.9 |
| Battery 4-5 | Positive current collector 4-5 | 78.2 |
| Battery 4-6 | Positive current collector 4-6 | 79.5 |
| Battery 4-7 | Positive current collector 4-7 | 80.6 |
| Battery 4-8 | Positive current collector 4-8 | 79.8 |
| Battery 4-9 | Positive current collector 4-9 | 81.8 |
| Battery 4-10 | Positive current collector 4-10 | 83.9 |
| Battery 4-11 | Positive current collector 4-11 | 87.1 |

(continued)

| Battery No. | Positive current collector No. | Capacity retention ratio after 1000 cycles at 45°C, 1C/1C (% ) |
|---|---|---|
| Battery 4-12 | Positive current collector 4-12 | 87.6 |
| Battery 4-13 | Positive current collector 4-13 | 87.3 |

The battery using the positive current collector of the present application has a good cycle life, especially the battery made of the positive current collector provided with a protective layer. The capacity retention rate after 1000 cycles at 45 °C and 1C/1C is further improved, which shows that the reliability of the battery is better.

3. The role of the positive current collector of the present application in improving the weight energy density of electrochemical devices

Table 5

| No. | Support layer | | Mental Conductive Layer | | Thickness of positive current collector $\mu$m | Weight percent of positive current collector% |
|---|---|---|---|---|---|---|
| | Material | $D_2$ $\mu$m | Material | $D_1$ $\mu$m | | |
| Positive current collector 91 | PET | 10 | Al | 0.5 | 11 | 50 |
| Positive current collector 92 | PI | 6 | Al | 0.3 | 6.6 | 30 |
| Positive current collector 93 | PI | 5 | Al | 1.5 | 8.0 | 45.8 |
| Positive current collector 94 | PET | 4 | Al | 0.9 | 5.8 | 31.7 |
| Positive current collector 95 | PI | 3 | Al | 0.2 | 3.4 | 16.7 |
| Positive current collector 96 | PI | 1 | Al | 0.4 | 1.8 | 10.8 |
| Conventional positive current collector | / | / | Al | / | 12 | 100 |

In Table 5, the weight percentage of the positive current collector refers to the percentage of the weight of the positive current collector per unit area divided by the weight of the conventional positive current collector per unit area.

Compared with the traditional aluminum foil positive current collector, the weight of the positive current collector in the embodiments of the present application is reduced to varying degrees, thereby improving the weight energy density of the battery.

The above are only specific embodiments of the present application, but the protection scope of the present application is not limited to this. Anyone familiar with the technical field may easily think of various types of modifications or replacements within the technical scope disclosed in the present application. These equivalent modifications or replacements shall be covered within the protection scope of the present application. Therefore, the protection scope of the present application shall be subject to the protection scope of the claims.

**Claims**

1. A positive current collector, comprising:

   a support layer, comprising two opposite surfaces in its own thickness direction;
   a metal conductive layer, disposed on at least one of the two opposite surfaces of the support layer;

wherein a ratio of a density of the metal conductive layer to an intrinsic density of a material of the metal conductive layer is greater than or equal to 0.89, and the material of the metal conductive layer is selected from one or more of aluminum, aluminum alloy, nickel, nickel alloy, titanium, titanium alloy, silver and silver alloy.

2. The positive current collector according to claim 1, wherein the material of the metal conductive layer is aluminum or aluminum alloy;

preferably, the density of the metal conductive layer is 2.4 g/$cm^3$~2.8 g/cm$^3$, preferably 2.5 g/cm$^3$ ~ 2.8 g/cm$^3$; and/or,
preferably, the metal conductive layer is a vapor deposited layer or an electroplated layer.

3. The positive current collector according to claim 1 or 2, wherein a thickness $D_1$ of the metal conductive layer is 300 nm$\leq D_1\leq$2 $\mu$m, preferably 500 nm$\leq D_1\leq$1.5 $\mu$m, more preferably 800 nm$\leq D_1\leq$1.2 $\mu$m; and /or,

a thickness $D_2$ of the support layer is 1 $\mu$m$\leq D_2\leq$20 $\mu$m, preferably 2 $\mu$m$\leq D_2\leq$10 $\mu$m, more preferably 2 $\mu$m$\leq D_2\leq$6 $\mu$m; and/or,
a Young's modulus E of the support layer is E$\geq$1.9 GPa, preferably 4 GPa$\leq$E$\leq$20 GPa.

4. The positive current collector according to any one of claims 1 to 3, wherein a volume resistivity of the metal conductive layer is 2.5$\times$10$^{-8}$ $\Omega\cdot$m ~ 7.8$\times$10$^{-8}$ $\Omega\cdot$m, preferably 2.5$\times$10$^{-8}$ $\Omega\cdot$m ~ 3.4$\times$10$^{-8}$ $\Omega\cdot$m.

5. The positive current collector according to any one of claims 1 to 4, wherein when a tensile strain of the positive current collector is 2%, a square resistance growth rate T of the metal conductive layer is T$\leq$10%, preferably T$\leq$5%, more preferably T$\leq$1%.

6. The positive current collector according to any one of claims 1 to 5, wherein the support layer comprises one or more of a polymer material and a polymer-based composite material;

preferably, the polymer material is selected from one or more of polyamide, polyimide, polyethylene terephthalate, polybutylene terephthalate, polyethylene naphthalate, polycarbonate, polyethylene, polypropylene, poly(propylene-ethylene), acrylonitrile-butadiene-styrene copolymer, polyvinyl alcohol, polystyrene, polyvinyl chloride, polyvinylidene fluoride, polytetrafluoroethylene, sodium polystyrene sulfonate, polyacetylene, silicone rubber, polyoxymethylene, polyphenylene ether, polyphenylene sulfide, polyethylene glycol, polysulfur nitride polymer materials, polyphenyl, polypyrrole, polyaniline, polythiophene, polypyridine, cellulose, starch, protein, epoxy resin, phenolic resin, and derivatives, cross-linked products and copolymers thereof; and/or,
preferably, the polymer-based composite material comprises the polymer material and an additive, and the additive comprises one or more of a metallic material and an inorganic non-metallic material.

7. The positive current collector according to any one of claims 1 to 6, further comprising a protective layer disposed on at least one of the two opposite surfaces in the thickness direction of the metal conductive layer;

preferably, the protective layer comprises one or more of metal, metal oxide, and conductive carbon, and more preferably comprises one or more of nickel, chromium, nickel-based alloy, copper-based alloy, aluminum oxide, cobalt oxide, chromium oxide, nickel oxide, graphite, superconducting carbon, acetylene black, carbon black, ketjen black, carbon dot, carbon nanotube, graphene and carbon nanofiber; and/or,
preferably, a thickness $D_3$ of the protective layer is 1 nm$\leq D_3\leq$200 nm, and $D_3\leq$0.1$D_1$.

8. The positive current collector according to claim 7, wherein the protective layer comprises an upper protective layer disposed on a surface of the metal conductive layer facing away from the support layer, and a lower protective layer disposed on a surface of the metal conductive layer facing the support layer.

9. The positive current collector according to claim 8, wherein a thickness of the upper protective layer is $D_a$, 1 nm$\leq D_a\leq$200 nm, and $D_a\leq$0.1$D_1$, a thickness of the lower protective layer is $D_b$, 1nm$\leq D_b\leq$200nm , and $D_b\leq$0.1$D_1$, and $D_a$ and $D_b$ satisfy $D_a>D_b$;
preferably, 0.5$D_a\leq D_b\leq$0.8$D_a$.

10. The positive current collector according to any one of claims 8 or 9, wherein the upper protective layer and the lower protective layer are metal oxide protective layers.

11. A positive plate, comprising a positive current collector and a positive active material layer disposed on the positive current collector, wherein the positive current collector is the positive current collector according to any one of claims 1 to 10.

12. An electrochemical device, comprising a positive plate, wherein the positive plate is a positive plate according to claim 11.

13. An apparatus, comprising an electrochemical device according to claim 12.

**FIG. 1**

**FIG. 2**

**FIG. 3**

FIG. 4

FIG. 5

FIG. 6

FIG. 7

**FIG. 8**

**FIG. 9**

**FIG. 10**

FIG. 11

**4**

**5** **5**

**5**

**FIG. 12**

**1**

**FIG. 13**

EP 3 930 057 A1

**FIG. 14**

**FIG. 15**

| INTERNATIONAL SEARCH REPORT | International application No. |
|---|---|
| | **PCT/CN2020/071176** |

**A.    CLASSIFICATION OF SUBJECT MATTER**

H01M 4/66(2006.01)i

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, CNKI, WPI, EPODOC: 集流, 集电, 高分子, 塑料, 金属, 导电, 密度, collector, polymer, plastic, metal, conduct???, density

**C.    DOCUMENTS CONSIDERED TO BE RELEVANT**

| Category* | Citation of document, with indication, where appropriate, of the relevant passages | Relevant to claim No. |
|---|---|---|
| X | CN 109830688 A (SUNWODA ELECTRONIC CO., LTD.) 31 May 2019 (2019-05-31) description, paragraphs 22-34, and figure 1 | 1-13 |
| A | CN 109873164 A (CONTEMPORARY AMPEREX TECHNOLOGY CO., LIMITED) 11 June 2019 (2019-06-11) entire document | 1-13 |
| A | CN 108832134 A (QINGTAO KUNSHAN NEW ENERGY MATERIAL RESEARCH INSTITUTE CO., LTD.) 16 November 2018 (2018-11-16) entire document | 1-13 |
| A | CN 107123812 A (ANHUI ZHONGZHI JINGU ENERGY TECHNOLOGY CO., LTD.) 01 September 2017 (2017-09-01) entire document | 1-13 |
| A | WO 2019103465 A1 (LG CHEMICAL LTD.) 31 May 2019 (2019-05-31) entire document | 1-13 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 March 2020** | **31 March 2020** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

<div align="center">

**INTERNATIONAL SEARCH REPORT**
**Information on patent family members**

</div>

| International application No. |
| --- |
| **PCT/CN2020/071176** |

| Patent document cited in search report | | | Publication date (day/month/year) | Patent family member(s) | | | Publication date (day/month/year) |
| --- | --- | --- | --- | --- | --- | --- | --- |
| CN | 109830688 | A | 31 May 2019 | None | | | |
| CN | 109873164 | A | 11 June 2019 | JP | 2019102429 | A | 24 June 2019 |
| | | | | EP | 3496190 | A1 | 12 June 2019 |
| | | | | US | 2019173090 | A1 | 06 June 2019 |
| CN | 108832134 | A | 16 November 2018 | None | | | |
| CN | 107123812 | A | 01 September 2017 | None | | | |
| WO | 2019103465 | A1 | 31 May 2019 | KR | 20190057966 | A | 29 May 2019 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910591842